(19) Europäisches Patentamt
European Patent Office
Office européen des brevets

(11) Publication number: **0 350 632 B1**

## EUROPEAN PATENT SPECIFICATION

(45) Date of publication of patent specification: **08.12.93**　(51) Int. Cl.⁵: **F16J 15/32**

(21) Application number: **89110691.6**

(22) Date of filing: **13.06.89**

(54) **Oil seal.**

(30) Priority: **13.06.88 JP 145393/88**

(43) Date of publication of application:
**17.01.90 Bulletin 90/03**

(45) Publication of the grant of the patent:
**08.12.93 Bulletin 93/49**

(84) Designated Contracting States:
**DE FR GB**

(56) References cited:
**DE-A- 2 364 291**
**FR-A- 1 227 078**
**US-A- 3 504 920**
**US-A- 3 923 315**

(73) Proprietor: **KOYO SEIKO CO., LTD.**
**5-8, 3-chome, Minamisenba**
**Chuo-ku Osaka(JP)**

(72) Inventor: **Yasui, Hiroyoshi c/o KOYO SEIKO CO., LTD.**
**5-8,3-chome**
**Minamisenba**
**Chuo-ku**
**Osaka(JP)**
Inventor: **Ojima, Teruo c/o KOYO SEIKO CO., LTD.**
**5-8,3-chome**
**Minamisenba**
**Chuo-ku**
**Osaka(JP)**
Inventor: **Mitsumaru, Michitoshi c/o KOYO SEIKO CO., LTD.**
**5-8,3-chome**
**Minamisenba**
**Chuo-ku**
**Osaka(JP)**

(74) Representative: **TER MEER - MÜLLER - STEINMEISTER & PARTNER**
**Mauerkircherstrasse 45**
**D-81679 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

The present invention relates to an oil seal according to the preamble of claims 1 and 2.

The invention relates to an oil seal for use between two relatively movable members, and/or particularly, to such seal served to recover oil leakage by a pumping function. The oil seal is provided to sides of a differential gear used for the transmission system of motor vehicles.

An oil seal of the above kind is disclosed by the US-A-3 504 920 and the US-A-3 923 315. The latter document refers to a fluid seal having a generally annular body of resilient material and defining a sealing edge or lip which is engageable with a machine component. The sealing lip is defined by the injunction of two angularly disclosed surfaces, and a pumping configuration is applied to one of those surfaces in the form of a series of ribs which extend at an angle relative to the sealing lip.

A similar structure is known from the US-A-3 934 888.

The lip having a sealing edge provides line-contact with the shaft for restricting frictional resistance between the rotational shaft and the oil seal. When the oil goes beyond the line-contact position from the oil-containing space during rotation of the rotational shaft, the oil can be recovered by the ribs and returned to the oil-containing space.

The FR-A-1 227 078 discloses an oil seal for rotary shafts having ribs on the inner peripheral surface of an annular seal body.

It is an object of the present invention to provide an improved oil seal for effectively recovering oil leakage which is otherwise leaked in the positive and negative rotation directions of the shaft.

To comply with this object, the invention is characterized by the characterizing features of claims 1 and 2.

Briefly, described, in accordance with the present invention, an oil seal comprises an annular seal body, a lip provided integrally at the inner circumference of the annular seal body, the lip having a diverging bevel on the outer side being free of oil, and a plurality of ribs provided on the bevel, the ribs forming an angle with respect to the rotation direction of a shaft surrounded by the seal body, such that the rear ribs with respect to the rotation direction of the shaft are longer and wider or higher, subsequently, than the front ribs.

The present invention will become more fully understood from the detailed description given hereinbelow and the accompanying drawings which are given by way of illustration only, and thus are not limitative of the present invention and wherein:

FIG. 1 is a cross-sectional view of an oil seal not being covered by the present invention;

FIG. 2 is a drawing for explaining the operation of the oil seal of FIG. 1;

FIG. 3 is a cross-sectional view of another oil seal also not being covered by the present invention; and

FIG. 4 is a cross-sectional view of a further oil seal according to the present invention.

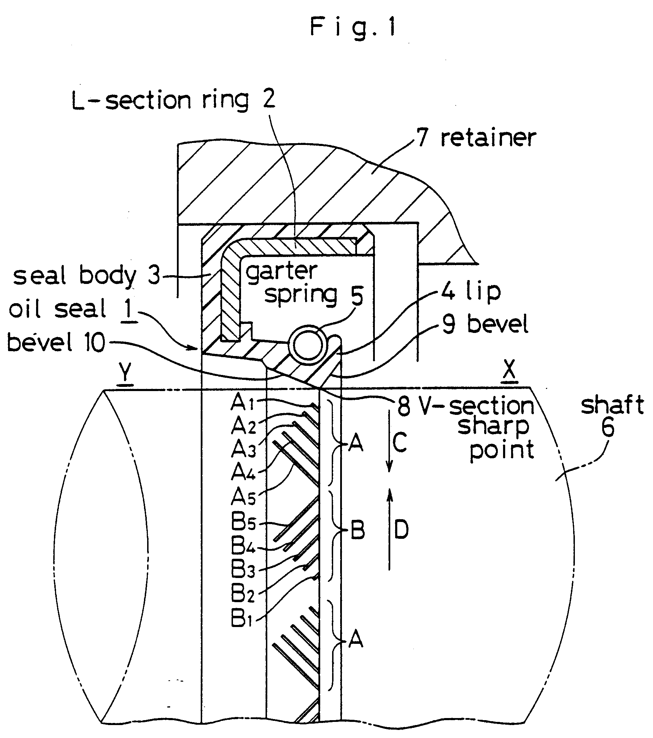

Referring to FIG. 1, an oil seal 1 of the first preferred embodiment of the present invention comprises an appoximately L-section ring 2, a seal body 3 fixed to the L-section ring 2, a lip 4 provided to the seal body 3, and a garter spring 5 for embracing the outer circumference of the lip 4. The oil seal 1 is interposed between a shaft 6 as indicated by a two-dot chain line and a retainer 7 for covering the shaft 6.

An approximately V-section sharp point 8 is provided at the inner circumference of the lip 4. A bevel 9 at one side of the sharp point 8 is positioned at the inner side of the oil seal so as to face a space X containing oil while another bevel 10 at the other side of the sharp point 8 is positioned at the outer side of the oil seal so as to face another space Y of the atmosphere. On the outer bevel 10, two series of ribs A ($A_1$-$A_5$) and B ($B_1$-$B_5$) are alternatively arranged in the circumferential direction. In particular, the length of the two series of individual ribs $A_1$ through $A_5$ and $B_1$ through $B_5$ for extending toward the space Y varies from one other. The first ribs $A_1$ and $B_1$ positioned at the front of the rotation direction of a shaft 6 have the shortest length while the rear ribs $A_2$ through $A_5$ and $B_2$ through $B_5$ have longer lengthes, gradually, in the rotation direction.

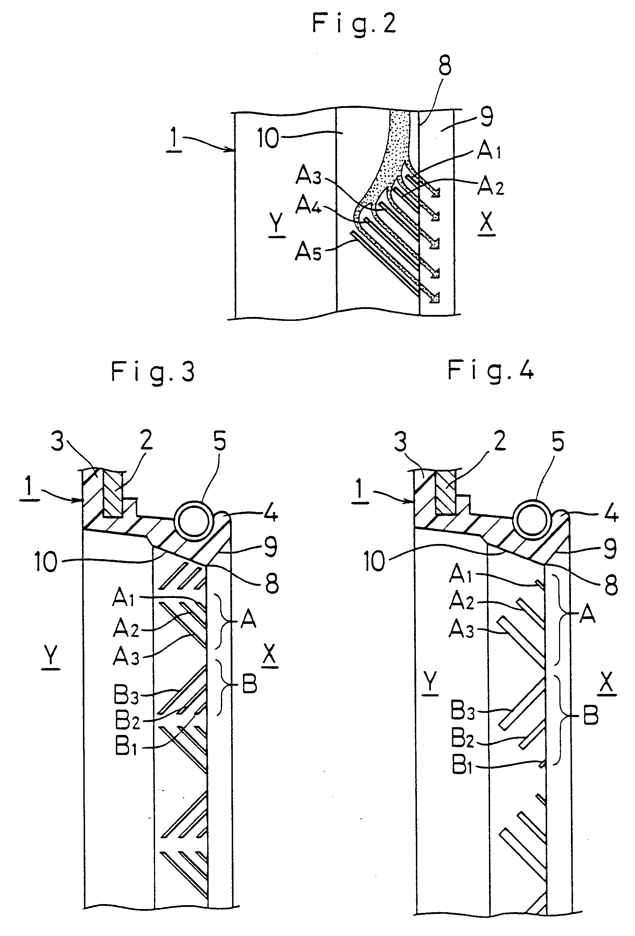

FIG. 2 shows an operation of the rib structures as shown in FIG. 1. When the shaft 6 rotates in a positive direction as shown in an arrow of FIG. 1, leaking oil flowing along the positive direction of the shaft 6 is first stopped by the first rib $A_1$ as shwon in FIG. 2. Overflow leaking oil is then stopped by the second rib $A_2$, and further the third rib $A_3$, and so on. Thus, leaking oil can be distributed into a plurality of ribs $A_1$ through $A_5$. The thus received oil is returned to the oil-containing space X with the pumping effect of the respective ribs $A_1$ through $A_5$.

Similarly, when the shaft 6 rotates in the reverse direction as shown in the arrow D of FIG. 1, leaking oil is recovered with the pumping effect of the respective ribs $B_1$ through $B_5$.

Thus, leaking oil is distributed to the respective ribs $A_1$ through $A_5$ or $B_1$ through $B_5$ and recovered with good effeciency. While the oil recovery can be achieved in the bidirectional way, a series of ribs can be prevented from helping oil leakage toward the space Y, the group of ribs not serving to recover oil at a time when another series of ribs are being used to recover oil.

The oil seal 1 of FIG. 3 is provided with two series of three ribs $A_1$ through $A_3$ and $B_1$ through $B_3$ whose edges at the side of the space Y are lined in the axial direction. Therefore, every inlet for a groove formed between adjacent ribs can be aligned in a line, axially.

The oil seal 1 of FIG. 4 is provided with two series of ribs $A_1$ through $A_3$ and $B_1$ through $B_3$, whose lengthes are similar to those of the oil seal 1 of FIG. 1. The height or width of the ribs $A_1$ through $A_3$ and $B_1$ through $B_3$ become greater according to the rear position of the ribs in the rotation direction.

The following is an comparison between the conventional case and the present invention in terms of the oil recovery by the pumping effect.

| Table A | | | |
|---|---|---|---|
| rotation number of shaft \ Rib structure | I | II | III |
| 1,000 rpm | 2 mℓ/h | 3 | 5 |
| 2,000 | 7 | 10 | 20 |
| 3,000 | 25 | 40 | 45 |

I : the conventional case provided with two series of single-lined ribs

II : the conventional case provided with two series of ribs whose edges are extended in a line at a direction perpendicular to the axial direction.

III : the rib structure of the present invention as shown in FIG. 3.

Table A demonstrates the superiority of the rib structure of the present invention in connection with oil recovery efficiency. According to the rib structure of FIG. 3, the number of the ribs in a group of ribs is more than that of the conventional case I of Table A while the number of the groups of ribs within an extension of the bevel 10 is more than that of the conventional case II of Table A with in a same extension of the bevel 10.

That is, the total number of the ribs over the entire circumference can become greater than the conventional case. This results in good efficiency of oil recovery according to the rib structure of the present invention.

As described above, in accordance with the present invention, the length of the rear ribs in the rotation direction of the shaft, extending outside the oil seal becomes longer than that of the front ribs, in the rotation direction of the shaft, extending outside the oil seal. This enables leaking oil, from the front ribs in the rotation direction to the rear ribs, to be received and distributed by the respective rear ribs. The pumping effect of the respective front and rear ribs recovers oil effectively. While the oil recovery is enabled in the case of the positive and negative directions of the shaft, a series of ribs are prevented from helping oil leakage toward the space Y, the series not being used to recover oil at a time when another series of ribs are being used to recover oil.

## Claims

1. Oil seal, comprising an annular seal body (3) having a lip (4) provided integrally at the inner circumference of the annular seal body, said lip having a diverging bevel (9) on the outer side being free of oil, a plurality of ribs (A1-A3, B1-B3) being provided on the bevel (9) of said lip (4), the ribs forming an angle with respect to the rotational direction of a shaft (6) surrounded by the seal body, **characterized** in that the rear ribs (A2,A3,B2,B3) with respect to the rotational direction of the shaft (6) become longer and wider, subsequently, than the front ribs (A1,B1).

2. Oil seal, comprising an annular seal body (3) having a lip (4) provided integrally at the inner circumference of the annular seal body, said lip having a diverging bevel (9) on the outer side being free of oil, a plurality of ribs (A1-A3, B1-B3) being provided on the bevel (9) of said lip (4), the ribs forming an angle with respect to the rotational direction of a shaft (6) surrounded by the seal body, **characterized** in that the rear ribs (A2,A3,B2,B3) with respect to the rotational direction of the shaft (6) become longer and higher, subsequently, than the front ribs (A1,B1).

3. Oil seal as claimed in claim 1 or 2, **characterized** in that the plurality of series of ribs (A1-A3,B1-B3) is provided on the bevel (9).

4. Oil seal as claimed in claim 3, **characterized** in that each one of the plurality of series of ribs (A1-A3,B1-B3) has an alternate angle with respect to the rotational direction.

5. Oil seal as claimed in claim 1 or 2, **characterized** in that the outer edges of the plurality of ribs (A1-A3,B1-B3) are positioned back, subsequently, with respect to the rotational direction.

6. Oil seal as claimed in claim 1 or 2, **characterized** in that the outer edges of the plurality of ribs (A1-A3,B1-B3) are positioned in a line extended in axial direction.

## Patentansprüche

1. Öldichtung, mit einem ringförmigen Dichtungskörper (3) mit einer Lippe (4), die einstückig am inneren Umfang des ringförmigen Dichtungskörpers ausgebildet ist, welche Lippe eine divergierende Schrägfläche (9) auf der äußeren, ölfreien Seite aufweist, einer Anzahl von Rippen (A1-A3,B1-B3), die an der Schrägfläche (9) der Lippe (4) ausgebildet sind, welche Rippen einen Winkel zur Drehrichtung einer Welle (6) bilden, die durch den Dichtungskörper umgeben ist, dadurch **gekennzeichnet,** daß die hinteren Rippen (A2,A3,B2,B3) in bezug auf die Drehrichtung der Welle (6) nach und nach länger und breiter ausgebildet sind als die vorderen Rippen (A1,B1).

2. Öldichtung, mit einem ringförmigen Dichtungskörper (3) mit einer Lippe (4), die einstückig am inneren Umfang des ringförmigen Dichtungskörpers ausgebildet ist, welche Lippe eine divergierende Schrägfläche (9) auf der äußeren, ölfreien Seite aufweist, einer Anzahl von Rippen (A1-A3,B1-B3), die an der Schrägfläche (9) der Lippe (4) ausgebildet sind, welche Rippen einen Winkel zur Drehrichtung einer Welle (6) bilden, die durch den Dichtungskörper umgeben ist, dadurch **gekennzeichnet,** daß die hinteren Rippen (A2,A3,B2,B3) in bezug auf die Drehrichtung der Welle (6) nach und nach länger und höher ausgebildet sind als die vorderen Rippen (A1,B1).

3. Öldichtung nach Anspruch 1 oder 2, dadurch **gekennzeichnet,** daß die Anzahl der Reihen der Rippen (A1-A3,B1-B3) auf der Schrägfläche ausgebildet ist.

EP 0 350 632 B1

**4.** Öldichtung nach Anspruch 3, dadurch **gekennzeichnet,** daß jede der Anzahl der Reihen von Rippen (A1-A3,B1-B3) einen entgegengesetzten Winkel in bezug auf die Drehrichtung aufweist.

**5.** Öldichtung nach Anspruch 1 oder 2, dadurch **gekennzeichnet,** daß die äußeren Kanten der Anzahl der Rippen (A1-A3,B1-B3) nach und nach in bezug auf die Drehrichtung zurückgesetzt sind.

**6.** Öldichtung nach Anspruch 1 oder 2, dadurch **gekennzeichnet,** daß die äußeren Kanten der Anzahl der Rippen (A1-A3,B1-B3) in einer Linie angeordnet sind, die in Axialrichtung verläuft.

**Revendications**

**1.** Joint étanche à l'huile, comprenant un corps annulaire de joint (3) ayant une lèvre (4) prévue en une pièce à la circonférence intérieure du corps annulaire du joint, ladite lèvre présentant un chanfrein divergent (9) sur le côté extérieur qui est exempt d'huile, une multitude de nervures ($A_1$-$A_3$, $B_1$-$B_3$) étant prévue sur le chanfrein (9) de ladite lèvre (4), les nervures formant un angle par rapport au sens de rotation d'un arbre (6) entouré par le corps du joint, caractérisé en ce que les nervures arrière ($A_2$, $A_3$, $B_2$, $B_3$) par rapport au sens de rotation de l'arbre (6) deviennent plus longues et plus larges, subséquemment, que les nervures avant ($A_1$, $B_1$).

**2.** Joint étanche à l'huile, comprenant un corps annulaire de joint (3) ayant une lèvre (4) prévue en une pièce à la circonférence intérieure du corps annulaire du joint, ladite lèvre présentant un chanfrein divergent (9) sur le côté extérieur qui est exempt d'huile, une multitude de nervures ($A_1$-$A_3$, $B_1$-$B_3$) étant prévue sur le chanfrein (9) de ladite lèvre (4), les nervures formant un angle par rapport au sens de rotation d'un arbre (6) entoure par le corps du joint, caractérisé en ce que les nervures arrière ($A_2$, $A_3$, $B_2$, $B_3$) par rapport au sens de rotation de l'arbre (6) deviennent plus longues et plus hautes, subséquemment, que les nervures avant ($A_1$, $B_1$).

**3.** Joint étanche à l'huile selon la revendication 1 ou 2, caractérisé en ce que la multitude de séries de nervures ($A_1$-$A_3$, $B_1$-$B_3$) est prévue sur le chanfrein (9).

**4.** Joint étanche à l'huile selon la revendication 3, caractérisé en ce que chacune de la multitude de séries de nervures ($A_1$-$A_3$, $B_1$-$B_3$) a un angle alterné par rapport au sens de rotation.

**5.** Joint étanche à l'huile selon la revendication 1 ou 2, caractérisé en ce que les bords extérieurs de la multitude de nervures ($A_1$-$A_3$, $B_1$-$B_3$) sont placés en arrière, subséquemment, par rapport au sens de rotation.

**6.** Joint étanche à l'huile selon la revendication 1 ou 2, caractérisé en ce que les bords extérieurs de la multitude de nervures ($A_1$-$A_3$, $B_1$-$B_3$) sont placées suivant une ligne s'étendant dans le sens axial.

5

# Fig. 1

L-section ring 2

7 retainer

seal body 3

oil seal 1

bevel 10

garter spring 5

4 lip

9 bevel

Y

X

$A_1$
$A_2$
$A_3$
$A_4$
$A_5$
$B_5$
$B_4$
$B_3$
$B_2$
$B_1$

A

B

A

C

D

8 V-section sharp point

shaft 6

Fig.2

Fig.3

Fig.4

7